# EUROPEAN PATENT APPLICATION

(11) **EP 4 746 498 A1**
(43) Date of publication of application: **20.05.2026**
(21) Application number: 24840074.9
(22) Date of filing: 10.07.2024
(51) Int. Cl.: H04W 24/08, H04W 52/02, H04W 24/10, H04B 17/309

(54) **METHOD AND DEVICE FOR PERFORMING WIRELESS COMMUNICATION BY USING LOW POWER WAKEUP RECEIVER**

(30) Priority: 10.07.2023 KR 20230088938; 02.07.2024 KR 20240086778
(71) Applicant: KT Corporation, Seongnam-si, Gyeonggi-do 13606 (KR)
(72) Inventor: PARK, Ki Hyeon, Seongnam-si, Gyeonggi-do 13606 (KR)
(74) Representative: Santarelli
(86) International application number: PCT/KR2024/009815
(87) International publication number: WO 2025/014264

(57) **Abstract**

Provided is a method of a UE for performing wireless communication by using a low power wakeup receiver (LP-WUR). The method may include receiving, through a transceiver, configuration information about a reference signal and measurement information feedback configuration information, for estimating the state of a channel in which a low power wakeup signal (LP-WUS) is received, receiving, through the LP-WUR, the reference signal on the basis of the configuration information about the reference signal, and transmitting, through the transceiver, measurement information about the reference signal on the basis of the measurement information feedback configuration information.

## Description

### Technical Field

The present disclosure proposes a method and device for performing wireless communication using a low power wakeup receiver in a next generation radio access network (referring to "5G", "NR [New Radio]", "5G-Advanced", "6G" or a subsequent 3GPP radio access network in the disclosure).

### Background Art

The 3GPP continues research and development of wireless communication technology. In wireless communication systems, in addition to latency, reliability, and availability, energy efficiency of user equipment (UE) is also a very important consideration. Currently, a UE may need to be charged frequently according to the individual usage patterns. Designing for extending the battery lifetime of the UE is essential to enhance energy efficiency and provide a better user experience. Energy efficiency is critical for UEs that do not have a steady energy source.

Power consumption may vary depending on the length of a configured wakeup period. However, since high latency occurs, e.g., when a large DRX cycle is used to meet the battery lifespan requirements, it may not be suitable for services requiring both long battery lifetime and low latency.

As part of this aspect, a specific design is needed to enable the UE to consume power more efficiently when performing a wakeup operation.

### Detailed Description of the Invention

### Technical Problem

The disclosure may provide a method and device for performing wireless communication using a low power wakeup receiver.

### Technical Solution

In one aspect, the present disclosure may provide a method for a UE performing wireless communication using a low power wakeup receiver (LP-WUR). The method may include receiving, through a transceiver, configuration information for a reference signal for state estimation of a channel on which a low power wakeup signal (LP-WUS) is received and measurement information feedback configuration information, receiving a reference signal through a low power wakeup receiver based on the configuration information for the reference signal, and transmitting measurement information for the reference signal through the transceiver based on the measurement information feedback configuration information.

In another aspect, the present disclosure may provide a method for a base station controlling an operation of a UE performing wireless communication using a low power wakeup receiver (LP-WUR). The method may include transmitting, to a UE, configuration information for a reference signal for state estimation of a channel on which a low power wakeup signal (LP-WUS) is transmitted and measurement information feedback configuration information, transmitting a reference signal to the UE based on the configuration information for the reference signal, and receiving measurement information for the reference signal from the UE based on the measurement information feedback configuration information.

In yet another aspect, the present disclosure may provide a UE performing wireless communication using a low power wakeup receiver (LR). The UE may include a low power wakeup receiver, a transceiver, and a controller controlling operations of the low power wakeup receiver and the transceiver, wherein the controller receives, through the transceiver, configuration information for a reference signal for state estimation of a channel on which a low power wakeup signal (LP-WUS) is received and measurement information feedback configuration information, receives a reference signal through the low power wakeup receiver based on the configuration information for the reference signal, and transmits measurement information for the reference signal through the transceiver based on the measurement information feedback configuration information.

In still another aspect, the present disclosure may provide a base station controlling an operation of a UE performing wireless communication using a low power wakeup receiver (LP-WUR). The base station may include a transmitter, a receiver, and a controller controlling operations of the transmitter and the receiver, wherein the controller transmits, to a UE, configuration information for a reference signal for state estimation of a channel on which a low power wakeup signal (LP-WUS) is transmitted and measurement information feedback configuration information, transmits a reference signal to the UE based on the configuration information for the reference signal, and receives measurement information for the reference signal from the UE based on the measurement information feedback configuration information.

### Advantageous Effects

According to the present embodiments, a wakeup operation may be performed with efficient power consumption by using a low power wakeup receiver.

Further, according to the present embodiments, the quality of a channel on which a wakeup signal in the form receivable by a receiver with low standby power is transmitted and received may be managed, and an optimal channel may be selected based on the quality management.

### Brief Description of Drawings

FIG. 1 is a view schematically illustrating an NR wireless communication system in accordance with embodiments of the present disclosure.
FIG. 2 is a view schematically illustrating a frame structure in an NR system in accordance with embodiments of the present disclosure.
FIG. 3 is a view for explaining resource grids supported by a radio access technology in accordance with embodiments of the present disclosure.
FIG. 4 is a view for explaining bandwidth parts supported by a radio access technology in accordance with embodiments of the present disclosure.
FIG. 5 is a view illustrating an example of a synchronization signal block in a radio access technology in accordance with embodiments of the present disclosure.
FIG. 6 is a signal diagram for explaining a random access procedure in a radio access technology in accordance with embodiments of the present disclosure.
FIG. 7 is a view for explaining CORESET.
FIG. 8 is a flowchart illustrating a method of a UE for performing wireless communication using a low power wakeup receiver according to an embodiment.
FIG. 9 is a flowchart illustrating a method of a base station for controlling an operation of a UE performing wireless communication using a low power wakeup receiver according to an embodiment.
FIG. 10 is a block diagram illustrating a UE according to an embodiment.
FIG. 11 is a block diagram illustrating a base station according to another embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, W-iFi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

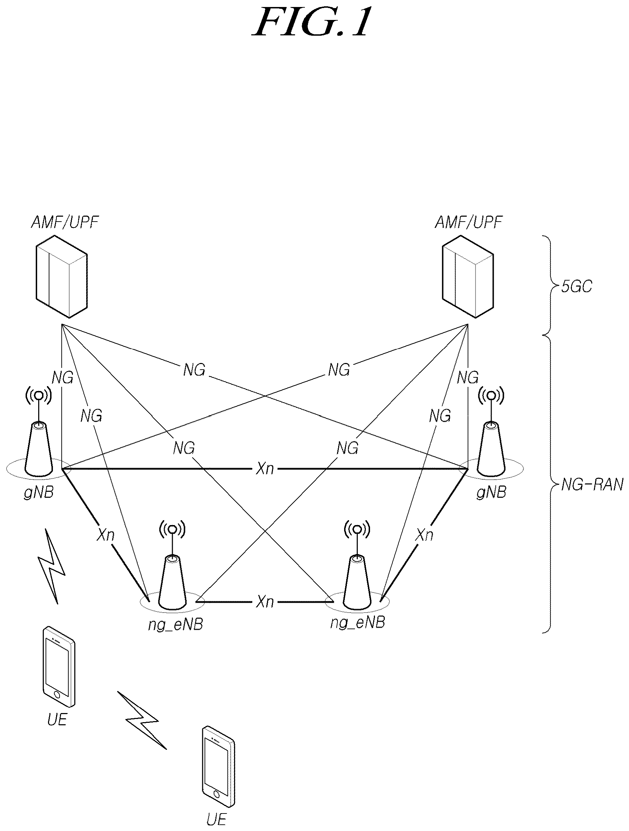

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

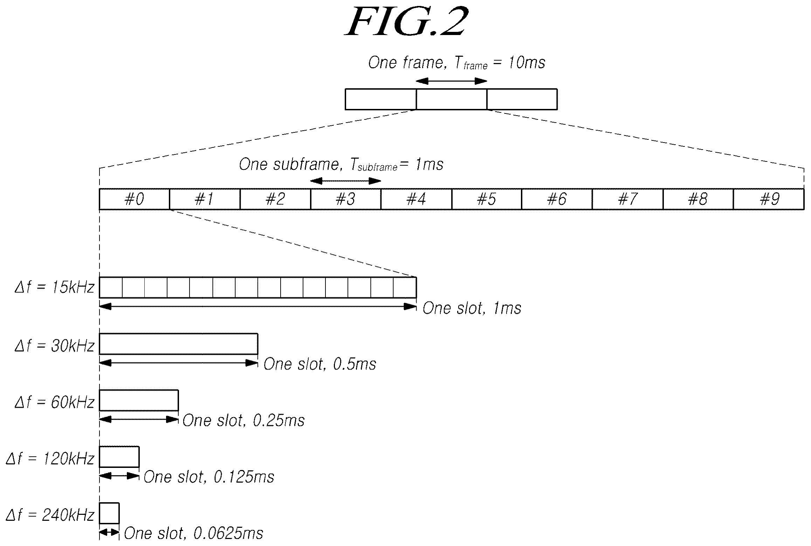

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

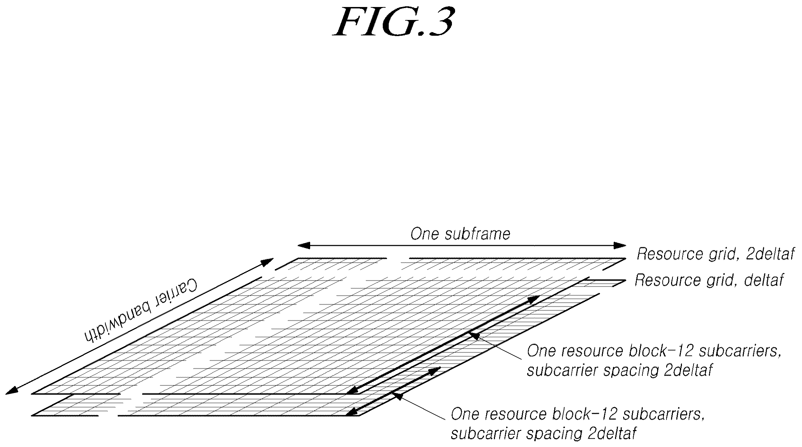

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

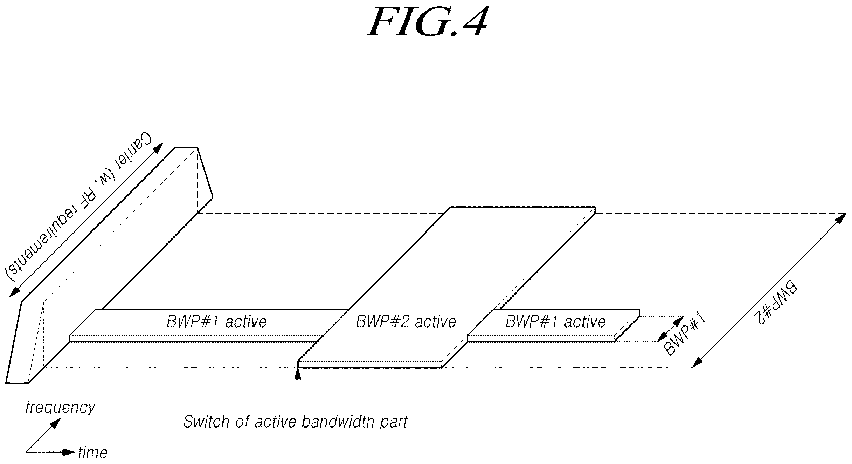

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

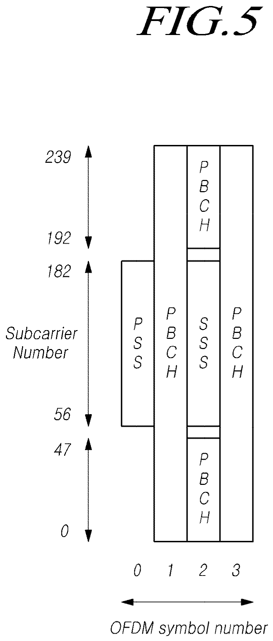

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

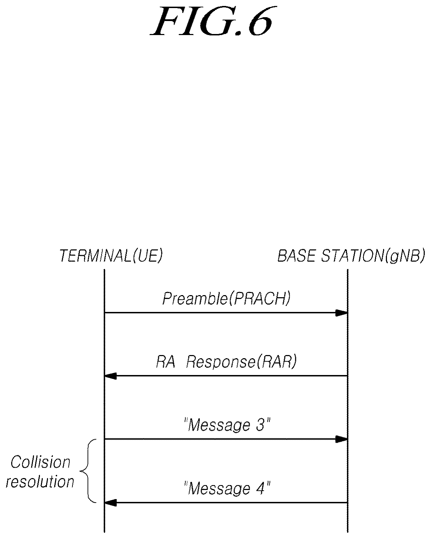

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

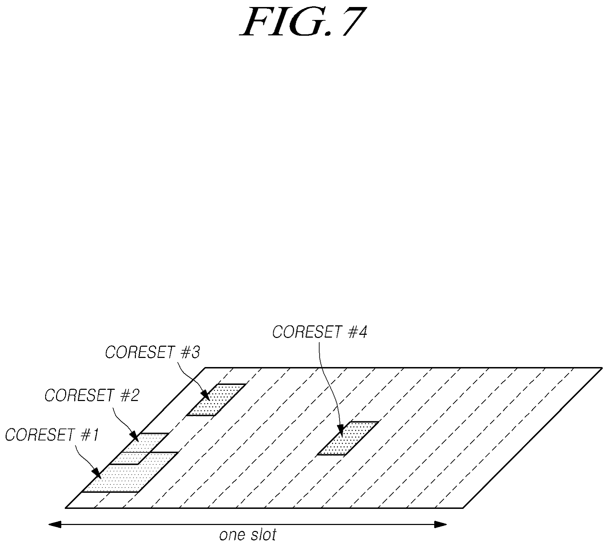

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

However, the NR is designed to support the UE of NR having different transmission/reception bandwidth capabilities over a single wideband NR CC. Accordingly, it is required to configure one or more bandwidth parts (BWPs) including subdivided bandwidths for an NR CC, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

In wireless communication systems, in addition to latency, reliability, and availability, energy efficiency of user equipment (UE) is also a very important consideration. Currently, a UE may need to be charged frequently according to the individual's usage time. Design for extending the lifetime of the battery of the UE is essential to enhance energy efficiency and provide a better user experience. Energy efficiency is critical for UEs without a steady energy source.

Power consumption may vary depending on the length of a configured wakeup period. However, since high latency occurs, e.g., when a large discontinuous reception (DRX) cycle is used to meet the lifespan requirements for the battery, it may not be suitable for services requiring a long battery lifetime and low latency.

The UE should wake up periodically once per DRX cycle, which determines power consumption during a period when there is no signal or data traffic. If the UE may wake up only when triggered such as paging, power consumption may be significantly reduced. This may be achieved using a wakeup signal that triggers the main radio and a separate receiver that may monitor the wakeup signal with ultra-low power consumption. The main radio operates for data transmission and reception and may be turned off or set to the maximum power saving mode unless it is turned on.

The power consumption for monitoring the wakeup signal may vary depending on the wakeup signal design and the hardware module of the wakeup receiver used for signal detection and processing.

In the disclosure, the main radio (MR) may be used as meaning a Tx/Rx module, i.e., a transmitter, a receiver, or a transceiver, operating for NR signals/channels in addition to low-power wakeup-related signals/channels. Further, the low power wakeup receiver (LP-WUR, LR) may be used as meaning an Rx module, i.e., a receiver, which operates to receive/process low-power wakeup-related signals/channels. Further, the MR mode may mean performing communication on the main radio, and the LR mode may mean performing communication using the low power wakeup receiver.

Hereinafter, a method for performing wireless communication using a low power wakeup receiver is specifically described with reference to related drawings.

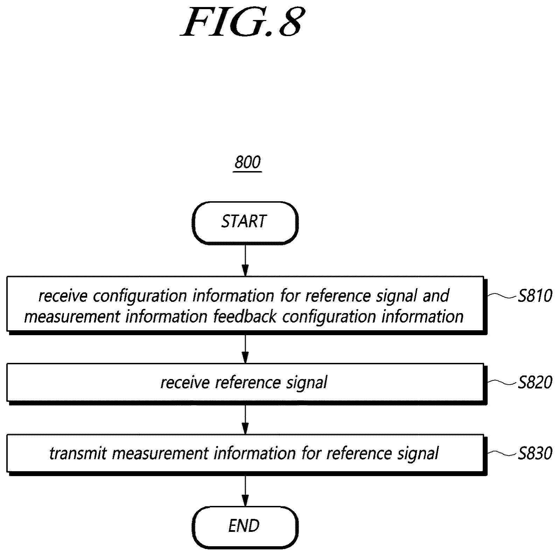

FIG. 8 is a flowchart illustrating a method 800 of a UE for transmitting and receiving data in full-duplex communication according to an embodiment.

Referring to FIG. 8, the UE may receive, through a transceiver, i) configuration information for a reference signal for state estimation of a channel on which a low power wakeup signal (LP-WUS) is received and ii) configuration information for measurement information feedback (e.g., measurement information feedback configuration information) (S810).

When it is configured to perform a low power wakeup operation using a low power wakeup receiver, the UE may monitor a low power wakeup signal based on configuration information for the low power wakeup operation. In this case, the UE may use the low power wakeup receiver provided separately from the transceiver. Thereafter, when a condition triggering monitoring of a downlink control channel, such as reception of the low-power wakeup signal, is satisfied, the UE may monitor the downlink control channel through the transceiver. Thereafter, the UE may perform wireless communication with the base station through the transceiver.

When performing the low power wakeup operation, the UE may receive, from a base station, at least one configuration information including parameters used for performing the low power wakeup operation. In this case, the at least one configuration information may include configuration information for a reference signal for state estimation of a channel on which the low power wakeup signal is received and measurement information feedback configuration information.

According to an embodiment, the reference signal for state estimation of the channel on which the low power wakeup signal is received may include a low power synchronization signal (LP-SS) configured for synchronization of the low power wakeup receiver. Alternatively, the reference signal may be configured as the low power wakeup signal or a portion of the low power wakeup signal. Alternatively, the reference signal may be in the form in which the base station does not transmit any signal.

The configuration information for the reference signal and the measurement information feedback configuration information may be received through higher layer signaling such as RRC signaling. According to an embodiment, resource configuration and ID assignment of the reference signal may be configured together when configuring the low power wakeup signal. Alternatively, the resource configuration and ID assignment may be configured during CSI configuration using an RRC message for resource configuration of the low power wakeup signal. For example, the configuration may be in the form of specifying that the reference signal is in the form of a low power wakeup signal within CSI-RS-ResourceSetList within CSI-ResourceConFIG. In this case, whether to be included in the NZP-CSI-RS series or the CSI-IM series may differ according to whether transmitting the low power wakeup signal as described above or not transmitting any signal.

Further, the measurement information feedback configuration information may be configured as an RRC message for feedback indication for the reference signal. This may be performed through a newly defined RRC message indicating a report for the low power wakeup signal in the form such as CSI-ReportConFIG. Alternatively, this may be performed in the form of setting an ID including the low power wakeup signal in resourceforChannelMeasurement within CSI-ReportConFIG. Such configuration may be performed periodically, semi-persistently, or aperiodically. Further, different RRC configurations may be configured according to whether the signal is for reference signal purposes or for actual role performance.

The report may be configured such that at least one of ACK, LP-WUS ID, L1-RSRP, L1-RSRQ, L1-SINR, frequency error, and phase error is reported.

When the report is configured aperiodically or semi-persistently, a feedback performance indication may be performed through downlink control information (DCI). In this case, the DCI may be included in an existing CSI trigger or defined in a new format.

Alternatively, feedback of the UE may be configured to be transmitted each time the low power wakeup signal is transmitted. For this purpose, a radio resource on which the feedback is to be transmitted may be pre-allocated. For example, the radio resource may be an uplink resource for transmission of uplink control information (UCI) of a specific frame within a specific time that is first designated or available after transmission of the low power wakeup signal. Alternatively, the radio resource may be a PRACH resource within a specific time that is first designated or available after transmission of the low power wakeup signal.

In this case, a resource format for the transmission may be pre-configured. For example, the resource format may be a UCI format, a pre-configured PUSCH, or a PRACH sequence.

Referring back to FIG. 8, the UE may receive the reference signal through the low power wakeup receiver based on the configuration information (S820) and transmit measurement information for the reference signal through the transceiver based on the measurement information feedback configuration information (S830).

The UE may receive the reference signal of the base station and feed back measurement results for the reference signal to the base station. According to an embodiment, the measurement information for the reference signal may include information on at least one of RSRQ, RSRP, and RSSI for the reference signal. Further, the feedback of measurement results may include at least one of ACK, LP-WUS ID, frequency error, and phase error.

The transmission of measurement information for the reference signal may be configured periodically or may be performed based on reception of downlink control information indicating transmission of the measurement information. When reporting of measurement information is configured aperiodically or semi-persistently, the UE may transmit measurement results according to downlink control information including a feedback performance indication.

Alternatively, when transmission of measurement information is configured to be transmitted each time the low power wakeup signal is transmitted, the UE may transmit measurement results when the low power wakeup signal is received.

The UE may perform transmission of measurement results at a predetermined time. For example, the predetermined time may be configured as a predetermined time after or within each low power wakeup signal transmission time. Alternatively, the predetermined time may be configured as a preset predetermined time after or within each specific low power wakeup signal transmission time. Alternatively, the predetermined time may be configured as a preset predetermined time after or within a low power wakeup signal transmission time after each timer expiration. Alternatively, the predetermined time may be configured as a preset predetermined time after or within a low power synchronization signal transmission time at each low power synchronization signal transmission or after an identical time interval. Alternatively, the predetermined time may be configured as a preset predetermined time after or within a trigger time through DCI, MAC, or the like for feedback.

According to an embodiment, when a channel state on which the low power wakeup signal is received is worse than a predetermined criterion, repeated transmission of the low power wakeup signal may be configured. Further, when the channel state on which the low power wakeup signal is received is worse than the predetermined criterion, a transmission period of the low power wakeup signal may be configured to be shorter. Further, when the channel state of the low power wakeup signal is worse than the predetermined criterion, a wakeup operation using the low power wakeup receiver may be switched to a legacy wakeup operation in MR.

According to the embodiments, a wakeup operation may be performed with efficient power consumption by using a low power wakeup receiver.

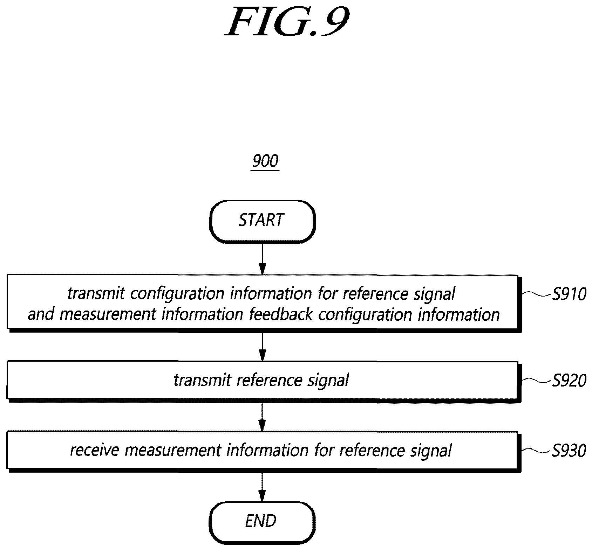

FIG. 9 is a flowchart illustrating a method 900 of a base station for transmitting and receiving data in full-duplex communication according to an embodiment. The description provided above in FIG. 8 may be omitted to avoid redundant description, and in this case, the omitted content may be substantially applied to the base station as long as it does not conflict with the technical spirit of the present disclosure.

Referring to FIG. 9, a base station may transmit, to a UE, i) configuration information for a reference signal for state estimation of a channel on which a low power wakeup signal (LP-WUS) is transmitted and ii) configuration information for measurement information feedback (e.g., measurement information feedback configuration information) (S910).

When it is configured to perform a low power wakeup operation using a low power wakeup receiver, the base station may transmit a low power wakeup signal based on configuration information for the low power wakeup operation. In this case, the UE may monitor the low power wakeup signal using a low power wakeup receiver provided separately from a transceiver. Thereafter, when a condition triggering monitoring of a downlink control channel such as reception of the low power wakeup signal is satisfied, the UE may monitor the downlink control channel through the transceiver. Thereafter, the base station may perform wireless communication with the UE through the transceiver.

When performing the low power wakeup operation, the base station may transmit, to the UE, at least one configuration information including parameters used for performing the low power wakeup operation. In this case, the at least one configuration information may include i) configuration information for a reference signal for state estimation of a channel on which the low power wakeup signal is transmitted and ii) configuration information for measurement information feedback (e.g., measurement information feedback configuration information).

According to an embodiment, the reference signal for state estimation of the channel on which the low power wakeup signal is transmitted may include a low power synchronization signal (LP-SS) configured for synchronization of the low power wakeup receiver. Alternatively, the reference signal may be configured as the low power wakeup signal or a portion of the low power wakeup signal. Alternatively, the reference signal may be in the form in which the base station does not transmit any signal.

The configuration information for the reference signal and the measurement information feedback configuration information may be transmitted through higher layer signaling such as RRC signaling. According to an embodiment, resource configuration and ID assignment of the reference signal may be configured together when configuring the low power wakeup signal. Alternatively, the resource configuration and ID assignment may be configured during CSI configuration using an RRC message for resource configuration of the low power wakeup signal. For example, the configuration may be in the form of specifying that the reference signal is in the form of a low power wakeup signal within CSI-RS-ResourceSetList within CSI-ResourceConFIG. In this case, whether to be included in the NZP-CSI-RS series or the CSI-IM series may differ according to whether transmitting the low power wakeup signal as described above or not transmitting any signal.

Further, the measurement information feedback configuration information may be configured as an RRC message for feedback indication for the reference signal. This may be performed through a newly defined RRC message indicating a report for the low power wakeup signal in the form such as CSI-ReportConFIG. Alternatively, this may be performed in the form of setting an ID including the low power wakeup signal in resourceforChannelMeasurement within CSI-ReportConFIG. Such configuration may be performed periodically, semi-persistently, or aperiodically. Further, different RRC configurations may be configured according to whether the signal is for reference signal purposes or for actual role performance.

The report may be configured such that at least one of ACK, LP-WUS ID, L1-RSRP, L1-RSRQ, L1-SINR, frequency error, and phase error is reported.

When the report is configured aperiodically or semi-persistently, a feedback performance indication may be performed through downlink control information (DCI). In this case, the DCI may be included in an existing CSI trigger or defined in a new format.

Alternatively, feedback of the UE may be configured to be transmitted each time the low power wakeup signal is transmitted. For this purpose, a radio resource on which the feedback is to be transmitted may be pre-allocated. For example, the radio resource may be an uplink resource for transmission of uplink control information (UCI) of a specific frame within a specific time that is first designated or available after transmission of the low power wakeup signal. Alternatively, the radio resource may be a PRACH resource within a specific time that is first designated or available after transmission of the low power wakeup signal.

In this case, a resource format for the transmission may be pre-configured. For example, the resource format may be a UCI format, a pre-configured PUSCH, or a PRACH sequence.

Referring back to FIG. 9, the base station may transmit the reference signal to the UE based on the configuration information (S920) and receive measurement information for the reference signal from the UE based on the measurement information feedback configuration information (S930).

The base station may transmit the reference signal to the UE and receive feedback of measurement results for the reference signal from the UE. According to an embodiment, the measurement information for the reference signal may include information on at least one of RSRQ, RSRP, and RSSI for the reference signal. Further, the feedback of measurement results may include at least one of ACK, LP-WUS ID, frequency error, and phase error.

The transmission of measurement information for the reference signal may be configured periodically or may be performed based on reception of downlink control information indicating transmission of the measurement information. When reporting of measurement information is configured aperiodically or semi-persistently, the base station may transmit downlink control information including a feedback performance indication to receive measurement results from the UE.

Alternatively, when transmission of measurement information is configured to be transmitted each time the low power wakeup signal is transmitted, the base station may receive measurement results each time the low power wakeup signal is transmitted.

The base station may perform reception of measurement results at a predetermined time. For example, the predetermined time may be configured as a predetermined time after or within each low power wakeup signal transmission time. Alternatively, the predetermined time may be configured as a preset predetermined time after or within each specific low power wakeup signal transmission time. Alternatively, the predetermined time may be configured as a preset predetermined time after or within a low power wakeup signal transmission time after each timer expiration. Alternatively, the predetermined time may be configured as a preset predetermined time after or within a low power synchronization signal transmission time at each low power synchronization signal transmission or after an identical time interval. Alternatively, the predetermined time may be configured as a preset predetermined time after or within a trigger time through DCI, MAC, or the like for feedback.

According to an embodiment, when a channel state on which the low power wakeup signal is received is worse than a predetermined criterion, repeated transmission of the low power wakeup signal may be configured. Further, when the channel state on which the low power wakeup signal is received is worse than the predetermined criterion, a transmission period of the low power wakeup signal may be configured to be shorter. Further, when the channel state of the low power wakeup signal is worse than the predetermined criterion, a wakeup operation using the low power wakeup receiver may be switched to a legacy wakeup operation in MR.

According to the embodiments described above, a wakeup operation may be performed with efficient power consumption by using a low power wakeup receiver.

Hereinafter, each embodiment related to a method for performing wireless communication using a low power wakeup receiver is described in detail with reference to the related drawings.

The disclosure provides a method for managing transmission channel quality for signal transmission/reception through a low power receiver in a 3GPP NR system. In particular, the disclosure provides a method for managing the quality of a channel on which a wakeup signal in a form receivable by a receiver with low standby power is transmitted and received and for selecting an optimal channel based on the channel quality management.

In 3GPP NR, technologies such as operation in an idle/inactive state and transmission schemes such as discontinuous transmission (DTX)/discontinuous reception (DRX) are used for power saving of a UE. Further, in UE power saving, in order to reduce blind decoding for PDCCH monitoring of a next period in a DTX/DRX environment, a form in which DCI indicating the necessity of transmission in the corresponding period is transmitted in a period prior to the corresponding PDCCH has been introduced. The form is typically referred to as a UE wakeup signal and is transmitted through DCI Format 2-6 in a search space defined for transmitting the corresponding DCI. The corresponding DCI has content as follows and is scrambled and transmitted through a special radio network temporary identifier (RNTI), PS_RNTI, for this purpose.
- block number 1, block number 2, ..., block number N

The block related information is configured with a location through RRC signaling, and each block is configured with 1 bit for a wakeup indication and a preset number of bits between 0 and 5 for an Scell dormancy indication. The UE may know whether PDCCH monitoring for reception in a next DRX cycle needs to be performed through reception of the corresponding signal and may skip transmission/reception of the corresponding cycle when indicated that reception is not necessary.

Meanwhile, a UE in an idle state identifies whether it needs to transition to a connected state through periodic paging. This paging is configured for each user group, and in this case, a paging message may be transmitted more precisely through a message called paging early indication (PEI) to prevent additional power consumption due to unnecessary paging for waking up UEs within the same group. The corresponding message is transmitted in DCI format 2-7 and is transmitted through a search space separately defined for transmitting the corresponding DCI. The corresponding DCI has contents as follows and is scrambled through a special RNTI, PEI_RNTI, for this purpose.
- Paging early indication: The size is determined at a higher layer, a location is determined for each UE and, when a bit at the corresponding location is 1, a next paging occasion is read.
- tracking reference signal (TRS) availability indication: included if necessary.

Meanwhile, for cases where UE power saving needs to be performed to a greater extent due to requirements such as Ambient IoT or decreased capability (REDCAP), a wakeup signal (low-power wakeup signal, referred to as LP-WUS in the disclosure) supporting a receiver with low standby power in hardware and a receiver for receiving the corresponding signal (referred to as LP-WUR in the disclosure) have been introduced.

Such LP-WUS and LP-WUR may be applied to low power WUS/WUR for power-sensitive small form factor devices including, for example, IoT use cases such as industrial sensors and controllers and wearables. However, it is not limited thereto and may be applied to other cases where a low-power wakeup operation may be applied.

For this purpose, specific design of an architecture of a low power wakeup receiver and a wakeup signal for supporting a wakeup receiver is required. Further, specific design of L1 procedures and higher layer protocol changes necessary for supporting a wakeup signal is required. Further, the impact on a system such as network power consumption, coexistence with non-low power WUR UEs, and network coverage/capacity/resource overhead should be studied.

In particular, for design of LP-WUS, signals of the following structures may be used.
- On-off keying (OOK): A method of transmitting 1 bit per time interval by dividing a signal transmission interval into time series and determining whether a specific frequency signal was transmitted or not in the corresponding time interval.
- Frequency-shift keying (FSK): A method of transmitting K bits per time interval by dividing a signal transmission interval into time series and determining which frequency signal was transmitted in the corresponding time interval, where 2 to the power of K transmission frequencies are used.
- OFDMA-based signal: A method of using a signal in the form similar to an existing PDCCH, or RACH preamble/reference signal/sync signal.

Further, two types of reception methods are being discussed for reception of the corresponding LP-WUS.
- Type 1: A receiver that is always on, with relatively high power consumption but no time constraint on a transmission signal.
- Type 2: A receiver that is periodically turned on, with relatively low power consumption but with a time constraint on a transmission signal and requiring periodic synchronization.

Among these, for Type 2, a low power synchronization signal (LP-SS), a new synchronization signal for synchronization of a low power receiving UE, has been introduced.

Regarding hardware characteristics of the receiver, enhancements are being discussed for three types of receivers for receiving OOK, two types of receivers for receiving FSK, and a receiver for receiving an OFDMA-based signal.

As for the OOK receiver, a radio frequency (RF) envelope-based receiver with low reception standby power but high noise sensitivity requiring large transmission power, an intermediate frequency (IF) receiver with good noise sensitivity characteristics but relatively high reception standby power and low hardware cost, and a Zero-IF receiver similar to IF while being able to adopt an existing OFDM receiver structure are being discussed. Further, as for the FSK receiver, receivers in the form of attaching basic structures of the IF receiver and the Zero-IF receiver in parallel are being discussed. As for the OFDMA-based receiver, existing OFDM-based receivers with a structure similar to that of the FSK receiver but omitting modules requiring a lot of power such as inverse fast Fourier transform (IFFT) using a matched filter or the like are being discussed.

An existing NR signal is OFDM-based and is configured with a set of resource elements (REs) having a time interval corresponding to a symbol length for each subcarrier. The LP-WUS to be newly introduced should basically use a structure receivable with relatively low power compared to an OFDM signal receiver, and accordingly, a signal in a form different from that of the existing OFDM may be used. These signals are of very diverse types, and an optimal signal structure may differ according to characteristics of the UE capability or required performance requirements. Therefore, a method for managing an LP-WUS transmission/reception channel is required to configure a stable transmission/reception environment satisfying each requirement characteristic of UEs operating based on LP-WUS. In particular, in order to establish an LP-WUS transmission environment in which a plurality of UEs may receive with optimal performance, a channel quality reporting method in the form different from a case using an existing CSI-RS or the like is required.

The disclosure provides a method for managing channel quality for transmission/reception of an LP-WUS signal. In particular, a method for a base station configuring a reference signal for LP-WUS signal channel quality measurement of a UE, a method for channel quality measurement and feedback based on the channel quality measurement, and a method for final transmission environment configuration based on feedback information are provided.

The disclosure broadly provides (1) a method for configuring and transmitting a reference signal by a base station, and (2) a method for channel quality feedback by a UE.

### Embodiment 1. Method for Configuring and Transmitting Reference Signal by Base Station

A base station may transmit a reference signal for channel estimation of a UE. Such a reference signal may be one of three main types. The reference signal may be an LP-WUS signal pre-agreed with the UE and receivable in a predefined form by an LP-WUR, an LP-WUS signal configured to be used by the corresponding UE, or a pre-agreed LP-SS signal. Alternatively, the reference signal may be in a transmission form configured with control and data to be transmitted to another user or a signal equivalent thereto. Alternatively, the reference signal may be in the form in which the base station does not transmit any signal. The base station may indicate in advance which form the reference signal of the base station for channel estimation of the UE is. For this purpose, the base station may specify each of the three signals or may specify some signals together. For example, the base station may inform of an area that is not transmitting an LP-WUS signal but is unknown whether it is empty or allocated to another user.

The specification of the reference signal, i.e., resource configuration and ID assignment, may be performed together when configuring the LP-WUS signal, or may be performed during CSI configuration using an RRC message for LP-WUS resource configuration. For example, the configuration may be in the form of specifying that the reference signal is in the form of LP-WUS within CSI-RS-ResourceSetList within CSI-ResourceConFIG. In this case, whether to be included in the NZP-CSI-RS series or the CSI-IM series may differ according to whether transmitting LP-WUS as described above or not transmitting any signal.

Further, an RRC message for feedback indication for the configured reference signal may be defined. This may be performed through a newly defined RRC message indicating a report for LP-WUS in the form such as CSI-ReportConfig, or may be performed in the form of setting an ID including LP-WUS in resourceforChannelMeasurement within CSI-ReportConFIG. Such configuration may be performed periodically, semi-persistently, or aperiodically, and may allow different RRC configurations to be performed according to whether the signal is for reference signal purposes or for actual role performance. When configuring the report, one or more of the following quantities may be configured to be reported.
- ACK: Feedback indicating that reception was successfully performed
- LP-WUS ID: When a plurality of LP-WUSs are configured in the same transmission space, an identifier of an LP-WUS determined to have been received, or feedback displayed in a predetermined number in order of high quality
- L1-RSRP
- L1-RSRQ
- L1-SINR
- Frequency error
- Phase error

When aperiodic or semi-persistent feedback configuration is performed, an actual feedback performance indication may be performed through DCI. In this case, a DCI for this may be included in an existing CSI trigger or defined in a new format.

Alternatively, the base station may configure feedback of the UE to be transmitted each time the LP-WUS signal is transmitted. This is particularly suitable for ACK feedback for a case used for actual wakeup notification. For this purpose, the base station may pre-allocate a space in which the feedback is to be transmitted. This may be a specific uplink resource space for UCI transmission of a specific frame within a specific time that is first designated or available after LP-WUS transmission. Alternatively, this may be a PRACH resource within a specific time that is first designated or available. In this case, a resource format for the transmission may be pre-configured, which may be a UCI format, a pre-configured PUSCH, or a PRACH sequence.

When a reference signal is transmitted periodically, the base station may not transmit the reference signal when a periodic reference signal overlaps a space previously informed to the UE to be used for another purpose. For example, a periodic reference signal may not be transmitted in an SSB, LP-SS, or a frame configured as uplink.

### Embodiment 2. Method for Channel Quality Feedback by UE

A UE may receive, through an LP- WUR to be used or indicated, the reference signal of the base station described in Embodiment 1 and feed back the results to the base station. Specifically, the UE may perform appropriate quality feedback for each of the three types of reference signals described above. The report may be cancelled without a special trigger when the reference signal is not transmitted from the base station due to overlap with another signal or when another uplink resource configured with priority is present.

### ① UE Feedback for Signal Transmitted in Pre-agreed Form

The signal may be an LP-WUS signal, an LP-SS signal, or another form of RS signal matchable by an LP-WUR receiver for which generation parameters are known. When the signal corresponds to a pre-agree reference signal form, the UE may report one or more of the following quantities regarding the quality of the signal and may feed back individually or collectively for a plurality of transmission spaces.
- ACK
- LP-WUS ID
- L1-RSRP
- L1-RSRQ
- L1-SINR
- Frequency error
- Phase error

The time for reporting these quantities may be one or more of the following.
- A preset predetermined time after/within each LP-WUS transmission time
- A preset predetermined time after/within each specific LP-WUS transmission time
- A preset predetermined time after/within an LP-WUS transmission time after each timer expiration
- A preset predetermined time after/within an LP-SS transmission time at each LP-SS transmission or after an identical time interval
- A preset predetermined time after/within a trigger time through DCI, MAC, or the like for feedback

### ② UE Feedback for Other User Signal

The signal is used for examining channel characteristics when an LP-WUS transmission band is not used for LP-WUS transmission but is transmitted for other purposes such as data of another UE. The examination may be performed in the form in which the base station specifies a time/frequency resource actually transmitted to another UE or in the form in which the base station specifies a resource space in which an arbitrary signal is transmitted. For example, the signal may be in the form of appropriately scrambled and modulated data. Alternatively, the signal may be in the form configured by mixing an SSB or RS. For the examination, the UE may report one or more of the following quantities regarding the quality of the signal.
- L1-RSRP, or a maximum or minimum value in a plurality of reference spaces
- L1-RSRQ, or a maximum or minimum value in a plurality of reference spaces
- L1-SINR, or a maximum or minimum value in a plurality of reference spaces
- SINR combined with estimation results from a signal transmitted in a pre-agreed form, or a maximum or minimum value in a plurality of reference spaces
- Quantized interference level

The time for reporting these quantities may be one or more of the following.
- A preset predetermined time after each configured resource transmission time
- A preset predetermined time after each specific LP-WUS transmission time
- At each specific period
- A preset predetermined time after a trigger time through DCI, MAC, or the like for feedback

### ③ UE Feedback for Form in Which Base Station Does Not Transmit Any Signal

The signal is used for examining channel characteristics due to interference by factors other than the base station in an LP-WUS transmission band. The examination may be performed in the form in which the base station specifies a specific resource space. Under the examination, the UE may report quantities in the same form as ② regarding the quality of the signal. Further, the UE may transmit at a report time in the same form as ②.

### ④ UE Feedback for Area Where Base Station Does Not Specify Whether Other User Signal Exists or Is Empty

The signal is used for enabling channel estimation to be performed using an area presented by the base station when the base station does not transmit LP-WUS but does not determine the use of the area, and the signal may be mainly used in periodic configuration or the like where it is difficult to predict future circumstances. Under the channel estimation, the UE may report quantities in the same form as ② and ③ regarding the quality of the signal. Further, the UE may transmit at a report time in the same form as ② and ③.

The UE may use the following means for the feedback information.
- Transmission as uplink control information (UCI) through a pre-configured uplink control channel (PUCCH)
- Transmission in a UCI piggyback form through a pre-configured uplink data channel (PUSCH)
- Transmission as a configured RACH sequence through a pre-configured random access channel (PRACH): The transmission may be particularly useful when transmitting only ACK as feedback information, but may also be used when transmitting other feedback information.

According to the method provided in the disclosure, channel quality management for efficiently performing transmission/reception of an LP-WUS signal transmitted in the form different from general NR may be performed.

Meanwhile, LP-SS for a low power wakeup receiver may be used for time and/or frequency synchronization and RRM measurement. In this case, a synchronization signal may be configured as a portion of LP-WUS or separately. Further, a synchronization signal may be configured as an aperiodic signal or as a periodic signal transmitted with a predetermined period. In the case of an LP-WUR capable of receiving existing PSS/SSS, existing PSS/SSS may be used as a synchronization signal.

The structure of LP-SS may be configured with a sequence or with a sequence followed by encoded bits (including CRC). LP-SS may be configured per cell and may deliver a beam index. According to an embodiment, when an overlay OFDM sequence is supported for LP-SS, the same sequence type may be used for LP-SS and LP-WUS.

LP-WUS and a signal/channel in MR may be transmitted and received in the same band. Further, LP-WUS and a signal/channel in MR may be transmitted and received on the same carrier within a band. Alternatively, LP-WUS and a signal/channel in MR may be transmitted and received on different carriers within a band.

Alternatively, LP-WUS and a signal/channel in MR may be transmitted and received in different bands. In other words, LP-WUS may be transmitted and received in a band outside a frequency band in MR, such as an unlicensed band.

LP-WUS may be configured in association with bandwidth parts configured for a UE. LP-WUS may be configured to be transmitted in an initial bandwidth part. Alternatively, LP-WUS may be configured with a location in a frequency domain where it is transmitted for each bandwidth part. For example, it may be configured with a predetermined number of resource blocks (PRBs) that are continuous from a top or bottom of each bandwidth part or may be configured with a predetermined number of resource blocks that are offset by an offset value based on a top or bottom of each bandwidth part.

LP-WUS may be configured to be transmitted and received within a guard band configured in a frequency band.

The LP-WUS bandwidth size is configured as an integer of PRBs, and According to an embodiment, may be configured to be 5 MHz or less in an IDLE/Inactive mode, and may be configured up to a maximum of 20 MHz. However, this is an example and may be configured differently as necessary.

When a channel state of LP-WUS is worse than a predetermined criterion, repeated transmission of LP-WUS may be configured. Further, when a channel state of LP-WUS is worse than a predetermined criterion, a transmission period of LP-WUS may be set to be shorter. Further, when a channel state of LP-WUS is worse than a predetermined criterion, a wakeup operation using LP-WUR may be switched to a legacy wakeup operation in MR.

In the case of RRC CONNECTED mode, a minimum time interval between LP-WUS reception and MR for starting PDCCH monitoring may be configured. In this case, the minimum time interval may be determined based at least in part on LP-WUS processing time, MR switching time for ramp up, and time/frequency synchronization of MR. Further, the minimum time interval may be reported to a base station as capability information of a UE. In this case, at least one minimum time interval information supportable by a UE may be reported.

Further, the disclosure proposes a specific method for an operation to be performed after wakeup when a UE intending to minimize power consumption using a low power wakeup receiver (WUR) receives a wakeup signal (WUS) through the WUR.

The UE may include an ultra-low power receiver separate from an existing transceiver so that a minimum amount of power is consumed while receiving a wakeup signal from a base station even in a short period or always on state. The ultra-low power receiver is defined as a receiver through which a UE may receive only a wakeup signal and essential signals related thereto and is defined as a receiver separate from a transceiver conventionally used for data transmission/reception. When a UE enters a deep sleep mode or a low power WUR mode, power consumption of the UE may be dramatically decreased by turning OFF a transceiver (Main Radio, MR tx./rx. module) that was used for transmitting/receiving conventional NR signals/channels and turning ON only an LP wakeup receiver to receive only a wakeup signal and essential signals related thereto. In this case, a UE that has received a wakeup signal through the corresponding receiver may be instructed to switch to a main radio (MR) mode, and the UE may switch a mode from LR to MR and perform communication through a transceiver for existing NR data transmission/reception.

Based on the foregoing, the disclosure proposes a specific method for resolving an error circumstance that may occur when an unintended UE receives a wakeup signal, for a UE monitoring WUS only through LP-WUR with the MR transceiver off, and for allowing a UE and a base station to quickly recognize the error circumstance and re-switch to an LR/deep sleep mode (or maintain an LR ON state, or synchronize low power receiver modes with each other).

The disclosure proposes an operation method for ON/OFF (i.e., PDCCH monitoring) of LP-WUR and MR modules of a UE that has received a Wake Up signal for a UE monitoring a Wake Up Signal (WUS) through a Low-Power Wake Up Receiver (LP-WUR, LR). More specifically, when a UE receives WUS through LP-WUR, the UE sets a timer (i.e., LR_transition_timer) for defining an interval in which downlink monitoring of both LR and MR is maintained while keeping WUR in an ON state for a specific time even when power of a tx./rx. module of main radio for data transmission/reception is turned ON.

While the timer is running, the UE may monitor downlink through two receivers with power of both LR and MR turned ON. While the timer is running, when reception of PDCCH configured for monitoring at the UE through MR is successful, the UE stops the timer and turns OFF the receiver of LP-WUR. In other words, WUS monitoring through LP WUR is stopped. When an indicator instructing transition to the LR mode is received from a base station while the timer is running or when the timer expires, the UE may turn OFF power of the MR module and transition to the LR mode to maintain WUS monitoring.

While the timer is running, the UE maintains both the Wakeup Receiver and the Main Radio Transceiver in an ON state and continues downlink monitoring configured in each mode. The UE, when receiving PDCCH transmitted to itself through MR while the timer is running, turns OFF power of the LR receiver of the UE and turns ON only MR tx./rx. module. In other words, a conventional NR operation is performed. When the timer expires, or when an instruction to transition to LP-WUR mode is received from a base station while the timer is running, the UE may turn OFF power of the MR tx/rx module (i.e., stops PDCCH monitoring through MR module) and continue WUS monitoring only through LP-WUR. If WUS is additionally received through LP-WUR while the timer is running, the UE may restart the timer and continue monitoring through MR and LR while the timer is running as described above.

If the UE receives WUS through LP-WUR, the UE turns ON power of a tx./rx. module of main radio for data transmission/reception and simultaneously transitions WUR to an OFF state. In other words, the UE maintains an ON state for only one of the MR and LR Radio modules, and an activated radio module may be determined according to WUS reception status, timer expiration, LR configuration information, or LR activation/deactivation indication information. Accordingly, when an LR mode is configured for an arbitrary UE, or additionally when LR mode activation is instructed, the UE may maintain an LR on and MR off state. When WUS is received from a base station through LR, the UE may turn off LR and turn on MR to perform monitoring for PDCCH.

In this case, when a timer for LR transition expires, or when explicit LR mode transition indication information is received from a base station, the UE turns off MR again and turns on LR to transition to LR mode. Specifically, a UE that has transitioned from LR mode to MR mode by receiving WUS performs monitoring for PDCCH through MR and operates the timer for transition to the LR mode. While the timer is running, when reception of PDCCH configured for monitoring at the UE through MR is successful, the UE may restart the timer or stop the LR transition operation based on the timer. In the latter case, the UE may enter LR mode again through explicit LR mode transition configuration or LR mode activation indication information from a base station. In the former case, the UE may enter LR mode when the restarted timer expires, or through explicit configuration/indication information from a UE.

The timer of the disclosure is a timer that starts when WUS is received on WUR, and provides a period during which both modes are simultaneously maintained for the timer period instead of immediate transition from LR to MR while the timer is running, during which the UE performs both WUS and PDCCH monitoring through LR and MR. In other words, the UE may perform transition from LR to MR only when a definite signal for transition to MR is received from a base station after WUS reception.

Further, the timer may be defined as the same timer as a timer for entering LR mode from MR mode. In other words, the timer is defined as a timer that (re)starts when PDCCH or WUS is received in MR or LR. If a UE receives LR-related configuration message including LR_transition_timer from a base station, a UE in MR mode (re)starts LR_transition_timer each time PDCCH is received. When the timer expires, the UE enters LR mode.

If a UE receives WUS in LR mode, the UE starts the LR_transition_timer and, when reception of PDCCH configured for monitoring at the UE through MR is successful (i.e., when reception of RNTI-based DCI format configured for monitoring at the UE is successful), the UE restarts LR_transition_timer.

If an indicator explicitly indicating entry into LR mode is received while the timer is running, the timer stops. Alternatively, if a UE receives WUS in LR mode, the UE starts the LR_transition_timer and, when reception of PDCCH configured for monitoring at the UE through MR is successful (i.e., when reception of RNTI-based DCI format configured for monitoring at the UE is successful), the UE may stop the LR_transition_timer to maintain MR mode until explicit LR mode transition configuration or LR mode activation indication information is received from a base station.

The LR_transition_timer may be set as a new timer whose timer value for an arbitrary UE may be configured by a base station. Alternatively, the LR-transition_timer may reuse existing timer values. For example, a DRX inactivity timer for DRX operation of a UE may be utilized as the LR_transition_timer.

The LR_transition_timer is configured for each individual UE in an LR mode or individual UEs belonging to a UE group configured to monitor an arbitrary WUS and, when the WUS is transmitted by a base station, the base station may also activate the same timer value for LR_transition_timer configured for each UE configured to monitor the WUS. Accordingly, the base station may detect PDCCH transmission/reception error of a UE that needs to transition to MR mode according to WUS transmission according to the UE operation embodiment according to WUS reception defined above or may synchronize UEs that have re-transitioned to LR mode according to timer expiration among UEs that have transitioned to MR mode according to WUS transmission.

For example, the proposed timer may also be applied for PDCCH transmission/reception error on MR after WUS transmission/reception between a base station and a UE. In other words, this means that the proposed timer may operate not only at a UE but also at a base station. Even when WUS transmission was correct transmission to a desired UE, if a base station has not received any feedback (e.g., HARQ feedback for PDCCH) from a UE during the proposed timer, this may correspond to a case where a UE failed to wake up for some reason, or woke up but failed to receive PDCCH to MR. In this case, the UE may have entered LR mode again or may not have transitioned to MR mode. To recognize such a circumstance, when a base station transmits WUS to a UE, the base station may start the proposed timer and retry WUS transmission to the LR receiver of the UE when the timer expires. If any UL signal (e.g., HARQ feedback for DL data) is received from a UE while the timer is running, the timer may stop and transition of the UE to MR mode may be recognized.

If a time interval between a time when a base station transmits WUS on LR and a time when PDCCH on MR corresponding to the transmitted WUS is transmitted is defined, the value of the timer may be set to a value greater than the time interval.

According to the method described above, in the case of a UE configured to monitor LP-WUS through LR from a base station, an LR_transition_timer value for MR activation state maintenance interval according to WUS reception and timer-based LR mode transition according thereto may be configured from a base station. However, the LR_transition_timer value may be configured through a separate RRC parameter for a UE configured with LR-WUS monitoring, or may follow a DRX inactivity timer value.

A UE configured with LP-WUS monitoring information or a UE configured with LP-WUS monitoring information and activated for monitoring LP-WUS through LR based thereon (i.e., a UE transitioned to LR mode) performs monitoring for WUS through LR according to the LP-WUS monitoring configuration information. In this case, when reception of LP-WUS from a base station is made through LR at an arbitrary UE, the UE activates MR to perform monitoring for PDCCH based on the RNTI configured for monitoring at the UE. However, in this case, the UE operates LR_transition_timer while maintaining a dual activation mode state in which an activation state for LR is maintained and, when PDCCH reception through MR is successful before the timer expires, the UE may stop the timer and transition to a complete MR state (i.e., transition LR to an off state).

On the other hand, when PDCCH reception through MR is not made until LR-transition_timer expires after transitioning MR to an activation state according to WUS reception, the UE turns off MR and operates in LR mode again. Alternatively, when WUS is received, it may be defined to turn off LR and transition MR to an on state to transition to a complete MR state. In this case, when PDCCH reception through MR is successful while LR_transition_timer is running, the UE may restart the LR_transition_timer. In this case as well, when PDCCH reception through MR is not made until LR_transition_timer expires, the UE may turn off MR and transition to LR mode again.

The LR_transition_timer is managed at a base station or network according to a timer value according to each UE's configuration value and, when LR_transition_timer is activated for an arbitrary UE, the base station or network may operate the timer in synchronization with the timer count of the UE based on the LR-transition_timer value configured for the UE. Accordingly, the base station or network may synchronize expiration and reset/restart of LR-transition_timer for an arbitrary UE and synchronize LR mode transition status accordingly.

The methods of the disclosure may be applied independently or in any type of combination. Further, among the terms used herein, novel terms are ones arbitrarily chosen for ease of understanding, and the technical spirit of the disclosure is applicable even where other terms with the same meaning are used.

Hereinafter, configurations of a UE and a base station capable of performing some or all of the present embodiments described with reference to FIGS. 1 to 9 are described with reference to the drawings. The foregoing description may be omitted to avoid redundant description. When the forgoing description is omitted, the omitted content may be substantially applied to the following description as long as it does not conflict with the technical spirit of the present disclosure.

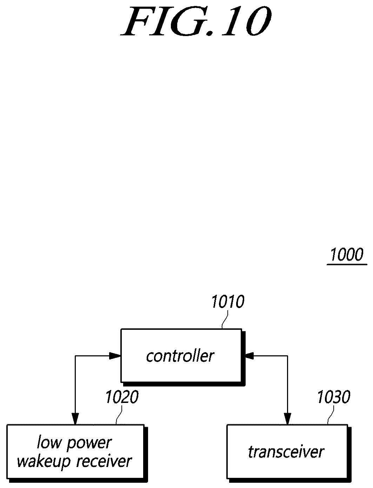

FIG. 10 is a block diagram illustrating a UE 1000 according to an embodiment.

Referring to FIG. 10, a UE 1000 according to an embodiment includes a low power wakeup receiver 1020, a transceiver 1030, and a controller 1010 controlling operations of the low power wakeup receiver and the transceiver. According to an embodiment, the transceiver is not limited to a single device and may be configured with separate devices corresponding to a transmitter and a receiver.

The controller 1010 controls overall operations of the UE 1000 according to a method for performing wireless communication using a low power wakeup receiver required for performing operations according to the embodiments described above.

When performing a low power wakeup operation, a controller 1010 may receive, from a base station, at least one configuration information including parameters used for performing the low power wakeup operation. In this case, the at least one configuration information may include i) configuration information for a reference signal for state estimation of a channel on which the low power wakeup signal is received and ii) configuration information for measurement information feedback (e.g., measurement information feedback configuration information).

According to an embodiment, the reference signal for state estimation of the channel on which the low power wakeup signal is received may include a low power synchronization signal (LP-SS) configured for synchronization of the low power wakeup receiver. Alternatively, the reference signal may be configured as the low power wakeup signal or a portion of the low power wakeup signal. Alternatively, the reference signal may be in the form in which the base station does not transmit any signal.

The configuration information for the reference signal and the measurement information feedback configuration information may be received through higher layer signaling such as RRC signaling. According to an embodiment, resource configuration and ID assignment of the reference signal may be configured together when configuring the low power wakeup signal. Alternatively, the resource configuration and ID assignment may be configured during CSI configuration using an RRC message for resource configuration of the low power wakeup signal.

Further, the measurement information feedback configuration information may be configured as an RRC message for feedback indication for the reference signal. This may be performed through a newly defined RRC message indicating a report for the low power wakeup signal in the form such as CSI-ReportConFIG. Alternatively, this may be performed in the form of setting an ID including the low power wakeup signal in resourceforChannelMeasurement within CSI-ReportConFIG. Such configuration may be performed periodically, semi-persistently, or aperiodically. Further, different RRC configurations may be configured according to whether the signal is for reference signal purposes or for actual role performance.

The report may be configured such that at least one of ACK, LP-WUS ID, L1-RSRP, L1-RSRQ, L1-SINR, frequency error, and phase error is reported.

When the report is configured aperiodically or semi-persistently, a feedback performance indication may be performed through downlink control information (DCI). In this case, the DCI may be included in an existing CSI trigger or defined in a new format.

Alternatively, feedback of the UE may be configured to be transmitted each time the low power wakeup signal is transmitted. For this purpose, a radio resource on which the feedback is to be transmitted may be pre-allocated. For example, the radio resource may be an uplink resource for transmission of uplink control information (UCI) of a specific frame within a specific time that is first designated or available after transmission of the low power wakeup signal. Alternatively, the radio resource may be a PRACH resource within a specific time that is first designated or available after transmission of the low power wakeup signal.

In this case, a resource format for the transmission may be pre-configured. For example, the resource format may be a UCI format, a pre-configured PUSCH, or a PRACH sequence.

The controller 1010 may receive the reference signal through the low power wakeup receiver based on the configuration information and transmit measurement information for the reference signal through the transceiver based on the measurement information feedback configuration information. The controller 1010 may receive the reference signal of the base station and feed back measurement results for the reference signal to the base station. According to an embodiment, the measurement information for the reference signal may include information on at least one of RSRQ, RSRP, and RSSI for the reference signal. Further, the feedback of measurement results may include at least one of ACK, LP-WUS ID, frequency error, and phase error.

The transmission of measurement information for the reference signal may be configured periodically or may be performed based on reception of downlink control information indicating transmission of the measurement information. When reporting of measurement information is configured aperiodically or semi-persistently, the controller 1010 may transmit measurement results according to downlink control information including a feedback performance indication.

Alternatively, when transmission of measurement information is configured to be transmitted each time the low power wakeup signal is transmitted, the controller 1010 may transmit measurement results when the low power wakeup signal is received.

The controller 1010 may perform transmission of measurement results at a predetermined time. For example, the predetermined time may be configured as a predetermined time after or within each low power wakeup signal transmission time. Alternatively, the predetermined time may be configured as a preset predetermined time after or within each specific low power wakeup signal transmission time. Alternatively, the predetermined time may be configured as a preset predetermined time after or within a low power wakeup signal transmission time after each timer expiration. Alternatively, the predetermined time may be configured as a preset predetermined time after or within a low power synchronization signal transmission time at each low power synchronization signal transmission or after an identical time interval. Alternatively, the predetermined time may be configured as a preset predetermined time after or within a trigger time through DCI, MAC, or the like for feedback.

According to an embodiment, when a channel state on which the low power wakeup signal is received is worse than a predetermined criterion, repeated transmission of the low power wakeup signal may be configured. Further, when the channel state on which the low power wakeup signal is received is worse than the predetermined criterion, a transmission period of the low power wakeup signal may be configured to be shorter. Further, when the channel state of the low power wakeup signal is worse than the predetermined criterion, a wakeup operation using the low power wakeup receiver may be switched to a legacy wakeup operation in MR.

According to the embodiments described above, a wakeup operation may be performed with efficient power consumption by using a low power wakeup receiver.

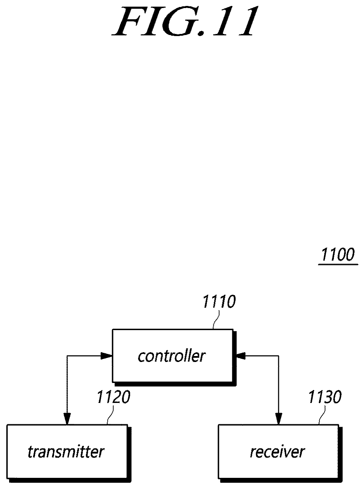

FIG. 11 is a block diagram illustrating a base station 1100 according to an embodiment.

Referring to FIG. 11, a base station 1100 according to an embodiment includes a transmitter 1120, a receiver 1130, and a controller 1110 controlling operations of the transmitter and the receiver.

The controller 1110 controls overall operations of the base station 1100 according to a method for performing wireless communication using a low power wakeup receiver required for performing operations according to the embodiments described above. The transmitter 1120 transmits downlink control information, data, and messages to a UE through the corresponding channel. The receiver 1130 receives uplink control information and data or messages from the UE via a corresponding channel.

The controller 1110 may transmit, to a UE, configuration information for a reference signal for state estimation of a channel on which a low power wakeup signal (LP-WUS) is transmitted and measurement information feedback configuration information. When performing a low power wakeup operation, the controller 1110 may transmit, to the UE, at least one configuration information including parameters used for performing the low power wakeup operation. In this case, the at least one configuration information may include configuration information for a reference signal for state estimation of a channel on which the low power wakeup signal is transmitted and measurement information feedback configuration information.

According to an embodiment, the reference signal for state estimation of the channel on which the low power wakeup signal is transmitted may include a low power synchronization signal (LP-SS) configured for synchronization of the low power wakeup receiver. Alternatively, the reference signal may be configured as the low power wakeup signal or a portion of the low power wakeup signal. Alternatively, the reference signal may be in the form in which the base station does not transmit any signal.

The configuration information for the reference signal and the measurement information feedback configuration information may be transmitted through higher layer signaling such as RRC signaling. According to an embodiment, resource configuration and ID assignment of the reference signal may be configured together when configuring the low power wakeup signal. Alternatively, the resource configuration and ID assignment may be configured during CSI configuration using an RRC message for resource configuration of the low power wakeup signal.

Further, the measurement information feedback configuration information may be configured as an RRC message for feedback indication for the reference signal. This configuration may be performed through a new RRC indicating a report for the low power wakeup signal in the form such as CSI-ReportConFIG. Alternatively, this may be performed in the form of setting an ID including the low power wakeup signal in resourceforChannelMeasurement within CSI-ReportConFIG. Such configuration may be performed periodically, semi-persistently, or aperiodically. Further, different RRC configurations may be configured according to whether the signal is for reference signal purposes or for actual role performance.

The report may be configured such that at least one of ACK, LP-WUS ID, L1-RSRP, L1-RSRQ, L1-SINR, frequency error, and phase error are reported.

When the report is configured aperiodically or semi-persistently, a feedback performance indication may be performed through downlink control information (DCI). In this case, the DCI may be included in an existing CSI trigger or defined in a new format.

Alternatively, feedback of the UE may be configured to be transmitted each time the low power wakeup signal is transmitted. For this purpose, a radio resource on which the feedback is to be transmitted may be pre-allocated. For example, the radio resource may be an uplink resource for transmission of uplink control information (UCI) of a specific frame within a specific time that is first designated or available after transmission of the low power wakeup signal. Alternatively, the radio resource may be a PRACH resource within a specific time that is first designated or available after transmission of the low power wakeup signal.

In this case, a resource format for the transmission may be pre-configured. For example, the resource format may be a UCI format, a pre-configured PUSCH, or a PRACH sequence.

The controller 1110 may transmit the reference signal to the UE based on the configuration information and receive measurement information for the reference signal from the UE based on the measurement information feedback configuration information. The controller 1110 may transmit the reference signal to the UE and receive feedback of measurement results for the reference signal from the UE. According to an embodiment, the measurement information for the reference signal may include information on at least one of RSRQ, RSRP, and RSSI for the reference signal. Further, the feedback of measurement results may include at least one of ACK, LP-WUS ID, frequency error, and phase error.

The transmission of measurement information for the reference signal may be configured periodically or may be performed based on reception of downlink control information indicating transmission of the measurement information. When reporting of measurement information is configured aperiodically or semi-persistently, the controller 1110 may transmit downlink control information including a feedback performance indication to receive measurement results from the UE.

Alternatively, when transmission of measurement information is configured to be transmitted each time the low power wakeup signal is transmitted, the controller 1110 may receive measurement results each time the low power wakeup signal is transmitted.

The controller 1110 may perform reception of measurement results at a predetermined time. For example, the predetermined time may be configured as a predetermined time after or within each low power wakeup signal transmission time. Alternatively, the predetermined time may be configured as a preset predetermined time after or within each specific low power wakeup signal transmission time. Alternatively, the predetermined time may be configured as a preset predetermined time after or within a low power wakeup signal transmission time after each timer expiration. Alternatively, the predetermined time may be configured as a preset predetermined time after or within a low power synchronization signal transmission time at each low power synchronization signal transmission or after an identical time interval. Alternatively, the predetermined time may be configured as a preset predetermined time after or within a trigger time through DCI, MAC, or the like for feedback.

According to an embodiment, when a channel state on which the low power wakeup signal is received is worse than a predetermined criterion, repeated transmission of the low power wakeup signal may be configured. Further, when the channel state on which the low power wakeup signal is received is worse than the predetermined criterion, a transmission period of the low power wakeup signal may be configured to be shorter. Further, when the channel state of the low power wakeup signal is worse than the predetermined criterion, a wakeup operation using the low power wakeup receiver may be switched to a legacy wakeup operation in MR.

According to the embodiments described above, a wakeup operation may be performed with efficient power consumption by using a low power wakeup receiver.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority under 35 U.S.C. §119(a) to Korean Patent Application No. 10-2023-0088938, filed on July 10, 2023, and Korean Patent Application No. 10-2024-0086778, filed on July 2, 2024, the entire contents of each of which are hereby incorporated by reference. This application also claims priority to the above-identified applications in countries other than the United States on the same grounds, and the entire contents thereof are incorporated herein by reference.

## Claims

1. A method for a user equipment (UE) performing wireless communication using a low power wakeup receiver (LP-WUR), the method comprising:
receiving, through a transceiver, i) configuration information for a reference signal for state estimation of a channel on which a low power wakeup signal (LP-WUS) is received and ii) measurement information feedback configuration information;
receiving the reference signal through the low power wakeup receiver based on the configuration information for the reference signal; and
transmitting measurement information for the reference signal through the transceiver based on the measurement information feedback configuration information.

2. The method of claim 1, wherein the reference signal includes a low power synchronization signal (LP-SS) configured for synchronization of the low power wakeup receiver.

3. The method of claim 1, wherein the configuration information for the reference signal and the measurement information feedback configuration information are received through higher layer signaling.

4. The method of claim 1, wherein the measurement information for the reference signal includes information on at least one of reference signal received quality (RSRQ), reference signal received power (RSRP), and received signal strength indicator (RSSI) for the reference signal.

5. The method of claim 1, wherein the measurement information feedback configuration information is configured such that transmission of the measurement information for the reference signal is configured periodically or is performed based on reception of downlink control information indicating transmission of the measurement information.

6. A method for a base station controlling an operation of a user equipment (UE) performing wireless communication using a low power wakeup receiver (LP-WUR), the method comprising:
transmitting, to the UE, i) configuration information for a reference signal for state estimation of a channel on which a low power wakeup signal (LP-WUS) is transmitted and ii) measurement information feedback configuration information;
transmitting the reference signal to the UE based on the configuration information for the reference signal; and
receiving measurement information for the reference signal from the UE based on the measurement information feedback configuration information.

7. The method of claim 6, wherein the reference signal includes a low power synchronization signal (LP-SS) configured for synchronization of the low power wakeup receiver.

8. The method of claim 6, wherein the configuration information for the reference signal and the measurement information feedback configuration information are transmitted through higher layer signaling.

9. The method of claim 6, wherein the measurement information for the reference signal includes information on at least one of reference signal received quality (RSRQ), reference signal received power (RSRP), and reference signal strength indicator (RSSI) for the reference signal.

10. The method of claim 6, wherein the measurement information feedback configuration information is configured such that reception of the measurement information for the reference signal is configured periodically or is performed based on transmission of downlink control information indicating transmission of the measurement information.

11. A user equipment (UE) performing wireless communication using a low power wakeup receiver (LP-WUR), comprising:
a low power wakeup receiver;
a transceiver; and
a controller configured to control operations of the low power wakeup receiver and the transceiver,
wherein the controller receives, through the transceiver, i) configuration information for a reference signal for state estimation of a channel on which a low power wakeup signal (LP-WUS) is received and ii) measurement information feedback configuration information, receives the reference signal through the low power wakeup receiver based on the configuration information for the reference signal, and transmits measurement information for the reference signal through the transceiver based on the measurement information feedback configuration information.

12. The UE of claim 11, wherein the reference signal includes a low power synchronization signal (LP-SS) configured for synchronization of the low power wakeup receiver.

13. The UE of claim 11, wherein the configuration information for the reference signal and the measurement information feedback configuration information are received through higher layer signaling.

14. The UE of claim 11, wherein the measurement information for the reference signal includes information on at least one of reference signal received quality (RSRQ), reference signal received power (RSRP), and received signal strength indicator (RSSI) for the reference signal.

15. The UE of claim 11, wherein the measurement information feedback configuration information is configured such that transmission of the measurement information for the reference signal is configured periodically or is performed based on reception of downlink control information indicating transmission of the measurement information.
